(19) Europäisches Patentamt / European Patent Office / Office européen des brevets

(11) **EP 2 015 110 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(51) Int Cl.:
*G01V 8/20* (2006.01)  *G01V 8/10* (2006.01)

(21) Anmeldenummer: **08011412.7**

(22) Anmeldetag: **24.06.2008**

(54) **Optoelektronischer Sensor**

Optoelectronic sensor

Capteur optoélectronique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.07.2007 DE 102007032173**
**15.02.2008 DE 102008009180**

(43) Veröffentlichungstag der Anmeldung:
**14.01.2009 Patentblatt 2009/03**

(73) Patentinhaber: **SICK AG**
**79183 Waldkirch/Breisgau (DE)**

(72) Erfinder:
- **Schmitz, Stephan, Dr.**
**79108 Freiburg (DE)**
- **Szebakowski, Boris**
**79183 Waldkirch (DE)**

- **Geiler, Martin**
**77793 Gutach (DE)**
- **Kohler, Markus**
**79312 Emmendingen (DE)**
- **Hammes, Markus, Dr.**
**79102 Freiburg (DE)**

(74) Vertreter: **Manitz, Finsterwald & Partner GbR**
**Postfach 31 02 20**
**80102 München (DE)**

(56) Entgegenhaltungen:
**EP-A- 1 202 483        WO-A-02/060081**
**WO-A-02/093950        DE-A1- 4 010 274**
**DE-A1- 4 035 710        DE-A1- 19 926 214**
**DE-A1-102004 003 814    US-A1- 2003 053 519**
**US-B1- 6 211 807**

**Beschreibung**

Die Erfindung betrifft einen optoelektronischen Sensor mit wenigstens einem Lichtsender zur Aussendung von Lichtsignalen in einen Überwachungsbereich, wenigstens einem Lichtempfänger zum Empfang von vom Lichtsender ausgesandten Lichtsignalen und einer Steuereinrichtung zur Erzeugung und/oder Beeinflussung der Lichtsignale und zur Erzeugung eines Objektfeststellungssignals im Falle des Vorhandenseins eines Objektes im Überwachungsbereich in Abhängigkeit von den Ausgangssignalen des Lichtempfängers.

Ein Sensor dieser Art ist in der DE 40 35 710 A1 beschrieben.

Derartige Sensoren werden beispielsweise als einfache Lichtschranken oder mehrstrahlige Lichtgittersysteme zur Zugangsüberwachung eingesetzt, wobei insbesondere gefährliche Maschinenarbeitsbereiche oder bestimmte Räume innerhalb eines Gebäudes abgesichert werden sollen.

Wenn bei Sensoren der genannten Art ein Objekt in den Überwachungsbereich gelangt und dadurch der Lichtweg zwischen Lichtsender und Lichtempfänger unterbrochen wird, wird ein Objektfeststellungssignal generiert, das beispielsweise zum Abschalten einer Maschine und/oder zur Auslösung eines akustischen oder optischen Warnsignals führen kann.

Bei den derzeit üblichen Lichtgittern wird ein Lichtpuls oder eine Lichtpulsfolge ausgesandt, der bzw. die mittels eines Schwellwertdetektors nachgewiesen wird. Die jeweiligen Lichtpulse können nun aber durch Störsignale überlagert sein, was die Detektion der empfangenen Pulse bzw. Pulsfolgen zumindest erschwert. In der DE 199 26 214 A1 wird zur Unterdrückung von Störsignalen vorgeschlagen, sogenannte gut korrelierende Chirps-Folgen als Sendesignale zu verwenden. Dabei werden die Nutzsignale einer spektralen Spreizung unterzogen, um sie gegen Schmalband- oder Impulsstörungen unempfindlich zu machen.

Bei dem aus der DE 40 35 710 A1 bekannten Sensor werden zur Störunterdrückung der Sender mit einem Wechselsignal als Modulationssignal moduliert und die vom Empfänger abgegebenen Signale mit dem Modulationssignal korreliert.

Der Erfindung liegt die Aufgabe zugrunde, einen verbesserten optoelektronischen Sensor der eingangs genannten Art zu schaffen, der bei möglichst einfachem Aufbau und möglichst großer Reichweite einen optimalen Störabstand gewährleistet.

Erfindungsgemäß wird diese Aufgabe durch die kennzeichnenden Merkmale des Anspruchs 1 gelöst. Dabei sind die von dem Lichtsender in den Überwachungsbereich ausgesandten Lichtsignale jeweils durch ein nach dem Bandspreizverfahren mit einem Pseudozufallsrauschcode moduliertes Ausgangssignal erzeugt.

Das von dem Lichtempfänger empfangene Lichtsignal ist zur Identifizierung oder Rückgewinnung des einem jeweiligen Lichtsender zugeordneten Ausgangssignals mit dem dem betreffenden Lichtsender zugeordneten Pseudozufallsrauschcode beaufschlagbar. Dabei umfasst die Steuereinrichtung Mittel, um zur Identifizierung oder Rückgewinnung des einem jeweiligen Lichtsender zugeordneten Ausgangssignals die Autokorrelationsfunktion zwischen dem empfangenen Lichtsignal und dem betreffenden Pseudozufallsrauschcode zu bilden. Zudem umfasst die Steuereinrichtung Mittel, um den variablen zeitlichen Versatz zwischen dem Pseudozufallsrauschcode und dem durch diesen beaufschlagten empfangenen Lichtsignal so einzustellen, dass sich für die Autokorrelationsfunktion ein Maximalwert ergibt.

Aufgrund dieser Ausbildung ist auch bei größeren Reichweiten stets ein optimaler Störabstand gewährleistet. Da die Erzeugungsvorschrift für den Spreizcode bekannt ist, kann das Ausgangssignal durch Korrelation aus dem Hintergrundrauschen herausgefiltert werden. Mit der erfindungsgemäßen Verwendung von Pseudozufallsrauschcodes als Spreizcodes wird die Korrelation deutlich verbessert. Damit kann insbesondere auch mehreren Lichtsendern ein gemeinsamer Lichtempfänger zugeordnet werden, indem für die betreffenden Lichtsender unterschiedliche Pseudozufallsrauschcodes verwendet werden. Empfangsseitig können dann die Signale mittels der unterschiedlichen Pseudozufallsrauschcodes decodiert und ermittelt werden, von welchem Lichtsender welches Signal gesendet wurde. Damit kann die aktive Empfangsfläche der Optiken entsprechend reduziert werden. Es können also insbesondere die betreffenden ASICs besser über den Überwachungsbereich verteilt werden. Abhängig von der Auflösung lassen sich somit beispielsweise 15 bis 30 % der empfangsseitigen ASICs einsparen.

Bevorzugt ist der Pseudozufallsrauschcode über ein so genanntes primitives Polynom erzeugt. Ein solches primitives Polynom kann insbesondere eine Galois-Struktur in Software oder eine Binärstruktur in Hardware aufweisen.

Gemäß einer bevorzugten praktischen Ausführungsform des erfindungsgemäßen optoelektronischen Sensors umfassen die verwendeten Pseudozufallsrauschcodes zumindest eine der folgenden Sequenzen:

- M-Sequenzen,
- Gold-Sequenzen,
- Kasami-Sequenzen,
- Hadamard-Walsh-Sequenzen,
- Barker-Sequenzen.

Beispielsweise in dem Fall, dass in einem bestimmten Zeitintervall ein Lichtpuls empfangen werden muss, kann der Lichtpuls also mit einem Pseudozufallsrauschcode, das heißt einer Pulsfolge gemischt werden, die statistische Eigenschaften von zufälligem Rauschen besitzt. Eine solche Pulsfolge kann insbesondere durch ein sogenanntes primitives Polynom, das heißt insbesondere ein Polynom mit einer Galois-Struktur in Software oder einer Binärstruktur in Hardware erzeugt sein, wodurch orthogonale Pulsfolgen entstehen, bei denen die Autokorrelationsfunktion groß, die Kreuzkorrelationsfuktion dagegen klein ist. Wesentlich ist, dass als Spreizcode Pseudozufallsrauschcodes verwendet werden. Dabei sind die weiter oben genannten speziellen Pseudozufallsrauschcodes, das heißt die M-Sequenzen, Gold-Sequenzen, Kasami-Sequenzen, Hadamard-Walsh-Sequenzen und/oder Barker-Sequenzen bevorzugt, die zudem insbesondere für Lichtgitter geeignet sind. Diese Codes unterscheiden sich durch ihre Orthogonalität unter Störungen. Bei perfekter Synchronisation sind insbesondere die Hadamard-Walsh-Codes von Vorteil. Für Lichtgitter heutiger Bauart, bei denen insbesondere ein Puls oder eine Pulsfolge ausgesandt wird, der bzw. die mittels eines Schwellwertdetektors nachgewiesen werden, sind mit Vorteil insbesondere Kasami-Sequenzen einsetzbar, da hier eine optische Synchronisation vorliegt und Desynchroniationseffekte auftreten können. Barker-Codes sind insbesondere für die Synchronisation von Lichtgittern geeignet, während Gold-Codes mit dem Kasami-Sequenzen vergleichbar sind, die allerdings einen Unterraum aufspannen.

Gemäß einer bevorzugten praktischen Ausführungsform des erfindungsgemäßen optoelektronischen Sensors sind die von dem Lichtsender in den Überwachungsbereich ausgesandten Lichtsignale jeweils durch ein nach dem DSSS-(Direct Sequence Spread Spectrum)-Bandspreizverfahren mit dem Pseudozufallsrauschcode moduliertes Ausgangssignal erzeugt.

Gemäß diesem DSSS-Bandspreizverfahren kann ein jeweiliges Ausgangssignal mittels einer vorgegebenen Bitfolge gespreizt werden. Diese Bitfolge wird auch als Spreizcode oder Chipping-Sequenz bezeichnet.

Die von dem Lichtsender in den Überwachungsbereich ausgesandten Lichtsignale werden zweckmäßigerweise jeweils durch wenigstens einen mit dem Pseudozufallsrauschcode gemischten Lichtpuls erzeugt. In diesem Fall ist das jeweilige Ausgangssignal also durch wenigstens einen Lichtpuls gebildet.

Wie bereits erwähnt, können verschiedener Lichtsendern vorteilhafterweise unterschiedliche Pseudozufallsrauschcodes zugeordnet sein.

Dabei ist zweckmäßigerweise jeweils zumindest zwei Lichtsendern und vorzugsweise jeweils zumindest drei Lichtsendern ein gemeinsamer Lichtempfänger zugeordnet.

Gemäß einer bevorzugten praktischen Ausführungsform des erfindungsgemäßen optoelektronischen Sensors kann somit verschiedenen Lichtsendern, denen unterschiedliche Pseudozufallsrauschcodes zugeordnet sind, ein gemeinsamer Lichtempfänger zugeordnet sein, wobei die von dem gemeinsamen Lichtempfänger empfangenen Lichtsignale und/oder ein daraus gebildetes Signal zur Identifizierung oder Rückgewinnung der den jeweiligen Lichtsendern zugeordneten Ausgangssignale mit den den betreffenden Lichtsendern zugeordneten Pseudozufallsrauschcodes beaufschlagbar sind.

Lichtsender und Lichtempfänger können aufeinander gegenüberliegenden Seiten des Überwachungsbereichs angeordnet sein. Alternativ ist es auch möglich, Lichtsender und Lichtempfänger auf einer Seite des Überwachungsbereichs und einen Retroreflektor auf der gegenüberliegenden Seite des Überwachungsbereichs anzuordnen. Die zweite Variante entspricht einer Autokollimationsanordnung.

Der erfindungsgemäße optoelektronische Sensor kann vor allem auch eine Mehrzahl von Lichtsendern und Lichtempfängern in einer Lichtgitteranordnung umfassen, wobei in diesem Fall jeweils eine Mehrzahl von nebeneinander angeordneten Lichtsendern und Lichtempfängern in der jeweils erforderlichen Struktur angeordnet sein können.

Von besonderem Vorteil ist, wenn jeweils mehreren Lichtsendern ein gemeinsamer Lichtempfänger zugeordnet und entsprechend die Anzahl der Lichtempfänger geringer ist als die Anzahl der Lichtsender.

Sichere 3D-Kameras auf der Basis von Stereoskopie müssen mit einer großen Helligkeitsdynamik des Umgebungslichtes fertig werden. Um bei schwierigen Beleuchtungsbedingungen die sichere Funktion gewährleisten zu können, besteht die Möglichkeit, die optischen Eingangsdaten durch eine aktive Beleuchtung zu unterstützen. Da der Laserschutz und Kostengründe die aktive Beleuchtung über eine bestimmte Leistungsgrenze hinaus nicht weiter zulassen, benötigt man einen neuen Ansatz, das Signal/Rausch-Verhältnis bei gleichbleibender optischer Ausgangsleistung zu vergrößern und so die sichere Funktion des Sensors auch bei schwierigen Beleuchtungsverhältnissen sicherzustellen. Gemäß einer bevorzugten praktischen Ausführungsform des optoelektronischen Sensors umfasst dieser daher eine insbesondere sichere Kamera, der zur aktiven Beleuchtung des Überwachungsbereichs wenigstens ein Lichtsender zugeordnet ist, dessen in den Überwachungsbereich ausgesandte Lichtsignale jeweils durch ein nach dem Bandspreizverfahren mit einem Pseudozufallsrauschcode moduliertes Ausgangssignal erzeugt sind.

Dabei sind der der Kamera zugeordnete Lichtsender und/oder die Kamera durch die zugeordnete Steuereinrichtung zweckmäßigerweise so angesteuert, dass die aktive Beleuchtung synchron zur Belichtung der sensitiven Fläche der Kamera erfolgt.

Als Kamera ist bevorzugt eine 3D-Stereoskopie-Kamera vorgesehen.

Bei einer bevorzugten praktischen Ausführungsform wird mittels des der Kamera zugeordneten Lichtsenders in dem beleuchteten Überwachungsbereich ein strukturiertes, insbesondere kontrastreiches Muster erzeugt.

Die Spread-Spektrum-Technik kann auf die zuvor beschriebene Art und Weise also nicht nur beispielsweise in einem Lichtgitter, sondern insbesondere auch in der bildgebenden Sensorik mit aktiver Beleuchtung mit Vorteil eingesetzt werden, wodurch insbesondere eine Vergrößerung der effektiven Reichweite der sicheren 3D-Kamera auf Basis aktiver Beleuchtung erreicht wird. Dabei können die Beleuchtungslichtpulse in der zuvor beschriebenen Art und Weise wieder mit einer Pseudozufallsrausch-Pulsfolge gemischt werden, um orthogonale Pulsfolgen zu erhalten.

Die zuvor allgemein im Zusammenhang mit einem optoelektronischen Sensor beschriebenen Ausführungsformen können erfindungsgemäß also speziell auch bei einer insbesondere sicheren Kamera verwirklicht sein.

Die Beleuchtung kann synchron zur Belichtung der sensitiven Fläche der Kamera erfolgen. Dabei kann die Beleuchtung insbesondere mittels eines optischen Elements oder Lichtsenders erfolgen, das bzw. der in dem beleuchteten Raum ein strukturiertes, kontrastreiches Muster erzeugt.

Der Lichtpuls zur Beleuchtung kann wieder mit einer Pseudorausch-Pulsfolge gemischt werden, die beispielsweise durch ein sogenanntes primitives Polynom, zum Beispiel Galois-Struktur in Software oder BinärStruktur in Hardware, erzeugt wurde, wodurch orthogonale Pulsfolgen entstehen. Dabei können insbesondere wieder folgende Codes verwendet werden: M-Sequenzen, Barker-Codes, Kasami-Sequenzen, Gold-Codes und/oder Hadamard-Walsh-Codes. Dabei unterscheiden sich diese Codes durch ihre Orthogonalität unter Störungen. Bei perfekter Synchronisation sind zum Beispiel die Hadamard-Walsh-Codes am geeignetesten.

Wird die aufgenommene Bildsequenz mit dem Pulsfolgemuster korreliert, kann das jeweilige Gitter erheblich leichter nachgewiesen werden, als wenn man keine Korrelation benutzen würde.

Im Ergebnis ergibt sich eine deutliche Verbesserung des Signal/Rausch-Verhältnisses. Anhand von durchgeführten Simulationen unter Verwendung von 30 mm-Optiken hat sich gezeigt, dass mit einer entsprechenden sicheren Kamera Reichweiten von mehr als 100 m erreicht werden können.

Im Fall eines Lichtgitters sind als Pseudozufallsrauschcodes insbesondere Kasami-Folgen, Gold-Codes, M-Sequenzen, Barker-Codes, Hadamard-Walsh-Codes oder eine Kombination dieser Codes von Vorteil.

Die betreffenden Pulsfolgen lassen sich nur mit den Längen von $2^N$-1 Chips erzeugen, wobei N eine ganze Zahl darstellt. Da es im Lichtgitterbereich auf eine schnelle Ansprechzeit ankommt, ist es in der Praxis nicht möglich, ein beliebig hohes N zu wählen. In der Praxis hat sich ein N im Bereich von 5 bis maximal 8 als besonders vorteilhaft herausgestellt, was bedeutet, dass die Pulsfolgen in der Praxis nur quasi-orthogonal sein können.

Lichtgitter sind daher noch relativ empfindlich für Fremdlichtsender, das heißt insbesondere andere Codes ähnlicher Struktur. Dies ist besonders kritisch, da die Fluktuationen der Lichtenergie von LEDs bedingt durch den Herstellungsprozess natürlichen Schwankungsbreiten unterliegen. So kann davon ausgegangen werden, dass ein Störpegel maximal um einen Faktor 2 stärker als der eigentliche Nutzsender in den Empfänger einstrahlen kann, was bedeutet, dass der Nutzcode um einen solchen Faktor schwächer sein kann als der Störcode. Dies führt wiederum dazu, dass der Empfänger ab und zu den Störcode als Nutzsignal erkennt, sodass eine sichere Abschaltung nicht mehr gewährleistet ist.

Um dies zu verhindern bzw. die sogenannte "False Acceptance Rate" zu minimieren, zeichnet sich eine bevorzugte praktische Ausführungsform des erfindungsgemäßen optoelektronischen Sensors dadurch aus, dass die Steuereinrichtung so ausgeführt ist, dass zur Erzeugung eines jeweiligen Objektfeststellungssignals jeweils zumindest eine zweifache Auswertung von Ausgangssignalen des Lichtempfängers erfolgt.

Damit wird insbesondere die Störempfindlichkeit gegenüber Störsendern verringert, die einen ähnlichen Code wie der Nutzcode verwenden, wodurch ein gefahrloser Parallelbetrieb mehrerer Systeme ermöglicht wird.

Dabei ist die Steuereinrichtung bevorzugt so ausgeführt, dass ein jeweiliges Objektfeststellungssignal nur dann erzeugt wird, wenn zumindest zweimal zeitlich nacheinander festgestellt wurde, dass von dem Lichtempfänger kein Lichtsignal empfangen wurde, das dem betreffenden Lichtsender zugeordnet werden kann.

Von Vorteil ist hierbei insbesondere, wenn die Steuereinrichtung Mittel umfasst, um jeweils zumindest zweimal zeitlich nacheinander zur Identifizierung eines jeweiligen dem betreffenden Lichtsender zugeordneten Ausgangssignals die Autokorrelationsfunktion zwischen dem jeweiligen empfangenen Lichtsignal und dem betreffenden Pseudozufallsrauschcode zu bilden.

Bevorzugt sind die wenigstens zwei für die zumindest zweifache Auswertung zeitlich nacheinander von dem betreffenden Lichtsender ausgesandten Lichtsignale zeitlich so versetzt, dass sich ein unterschiedlicher zeitlicher Versatz zwischen dem Pseudozufallsrauschcode und den betreffenden, durch diesen Pseudozufallsrauschcode beaufschlagten empfangenen Lichtsignalen ergibt.

Für die zumindest zwei Auswertungen können insbesondere unterschiedliche Chipdauern für den jeweiligen Pseudozufallsrauschcode gewählt sein.

Von Vorteil ist insbesondere auch, wenn für jedes von dem Lichtsender ausgesandte Lichtsignal empfangsseitig eine definierte Detektionsschwelle vorgesehen ist.

Die Länge der Pseudozufallsrauschcodefolge ist bevorzugt in Abhängigkeit von der Anzahl von sich nicht überlappenden, zur selben Zeit aktivierten ausgesandten Lichtsignalen gewählt.

Gemäß einer weiteren bevorzugten Ausführungsform des erfindungsgemäßen optoelektronischen Sensors ist der Pseudozufallsrauschcode zur Realisierung eines kombinierten TDMA- und CDMA-Systems in zumindest zwei Chipfolgen aufgeteilt (TDMA = Time Division Multiple Access, Zeitmultiplexverfahren; CDMA = Code Division Multiple Access, Codemultiplexverfahren). Es können also insbesondere die folgenden Strategien angewandt werden, um sicherzustellen, dass der Störcode nicht als Nutzcode erkannt wird:

- Es wird eine Doppel-Auswertung vorgenommen.
- Eine Rotschaltung erfolgt nur, wenn zweimal hintereinander nicht das gewünschte Signal gesehen wird.
- Je nach Code wird der zeitliche Abstand von Strahl zu Strahl beispielsweise um einige μs variiert. Dadurch erscheint bei der zweiten Auswertung der Strahl in der Korrelationsauswertung nicht mehr an derselben Position.
- Je nach Code wird die Chipdauer ein wenig verändert. Dadurch erscheint bei der zweiten Auswertung der Strahl in der Korrelationsauswertung nicht mehr an derselben Position. Eine solche Lösung lässt sich auf einfache Art und Weise insbesondere in Hardware implementieren.
- Da die Energie von Strahl zu Strahl durch den Herstellungsprozess von LEDs um bis zu einem Faktor 2 schwanken kann, kann eine Detektionsschwelle pro Strahl eingeführt werden, wodurch ein besseres Entscheidungskriterium für die Akzeptanz eines betreffenden Signals gewonnen werden kann.
- Je länger die Codefolge, umso "orthogonaler" sind die Codes. Werden mehrere Strahlen, die sich nicht überlappen, zur selben Zeit aktiviert, so kann man bei insgesamt gleicher Ansprechzeit einen längeren Code wählen, wodurch ein höherer Störabstand erreicht wird.
- Der Code wird in zwei Chipfolgen aufgeteilt, wodurch eine Kombination von TDMA und CDMA realisiert werden kann. Dabei ergibt sich allerdings auch eine Verlängerung der Ansprechzeit.

Mit der erfindungsgemäßen Doppel-Auswertung ergibt sich in erster Linie eine Verbesserung des Signals/Rausch-Verhältnisses. Durchgeführte Simulationen haben ergeben, dass beispielsweise bei Verwendung von 30 mm-Optiken mit einer entsprechenden Doppel-Auswertung Reichweiten von mehr als 100 m erreicht werden können.
Es gibt beispielsweise bei N = 6 insgesamt 241 brauchbare Kasami-Codes. Werden beispielsweise 6 Codes verwendet, die den Anforderungen im Hinblick auf die geforderte Orthogonalität genügen, so tritt auch bei um einen Faktor 2 gegenüber dem Nutzsignal größeren Störsignalen praktisch keine Störung auf, was gegenüber den bisher bekannten optoelektronischen Sensoren eine deutliche Verbesserung darstellt.
Die Erfindung wird im Folgenden anhand von Ausführungsbeispielen unter Bezugnahme auf die Zeichnung näher erläutert; in dieser zeigen:

Figur 1    eine schematische Teildarstellung einer beispielhaften Ausführungsform eines optoelektronischen Sensors, wobei lediglich ein Kanal dargestellt ist,

Figur 2    eine Prinzipdarstellung zur Veranschaulichung des zur Bandspreizung anwendbaren DSSS-Verfahrens,

Figur 3    die Frequenzspektren des in der Figur 2 dargestellten Ausgangssignals und des in der Figur 2 dargestellten nach dem DSSS-Bandspreizverfahren mit einem Pseudozufallsrauschcode modulierten Ausgangssignals,

Figur 4    die Energiespektren des Ausgangssignals, des Pseudozufallsrauschcodes und des nach dem DSSS-Bandspreizverfahren mit dem Pseudozufallsrauschcode modulierten Ausgangssignals,

Figur 5    eine Prinzipdarstellung zur Veranschaulichung des Codemultiplexverfahrens,

Figur 6    eine beispielhafte Anwendung des Codemultiplexverfahrens auf einen optoelektronischen Sensor, bei dem z.B. jeweils drei Lichtsendern ein gemeinsamer Lichtempfänger zugeordnet ist,

Figur 7    eine schematische Darstellung eines ersten Abschnitts einer beispielhaften Synchronisation eines Lichtempfängers mit einem Lichtsender,

Figur 8    eine schematische Darstellung eines weiteren Abschnitts der Synchronisation des Lichtempfängers, mit dem Lichtsender,

Figur 9    die Frequenzspektren eines BezugsPseudozufallsrauschcodes und eines mit einem entsprechenden Pseudozufallsrauschcode modulierten Eingangssignals sowie ein sich aufgrund eines Vergleichs dieser beiden Signale ergebendes Korrelationsspektrum, wobei das Korrelationsspektrum noch keine Übereinstimmung der beiden Signale erkennen lässt,

Figur 10     eine mit der Figur 9 vergleichbare Darstellung, wobei die beiden miteinander zu vergleichenden Signale jedoch relativ zueinander so versetzt sind, dass das Korrelationsspektrum eine Übereinstimmung der beiden Signale erkennen lässt,

Figur 11     die Frequenzspektren eines BezugsPseudozufallsrauschcodes und eines stark verrauschten, mit einem entsprechenden Pseudozufallsrauschcode demodulierten Eingangssignals sowie ein sich aufgrund eines Vergleichs dieser beiden Signale ergebendes Korrelationsspektrum, wobei das Korrelationsspektrum noch keine Übereinstimmung der beiden Signale erkennen lässt, und

Figur 12     eine mit der Figur 11 vergleichbare Darstellung, wobei die beiden miteinander zu vergleichenden Signale jedoch relativ zueinander wieder so versetzt sind, dass das Korrelationsspektrum eine Übereinstimmung der beiden Signale erkennen lässt.

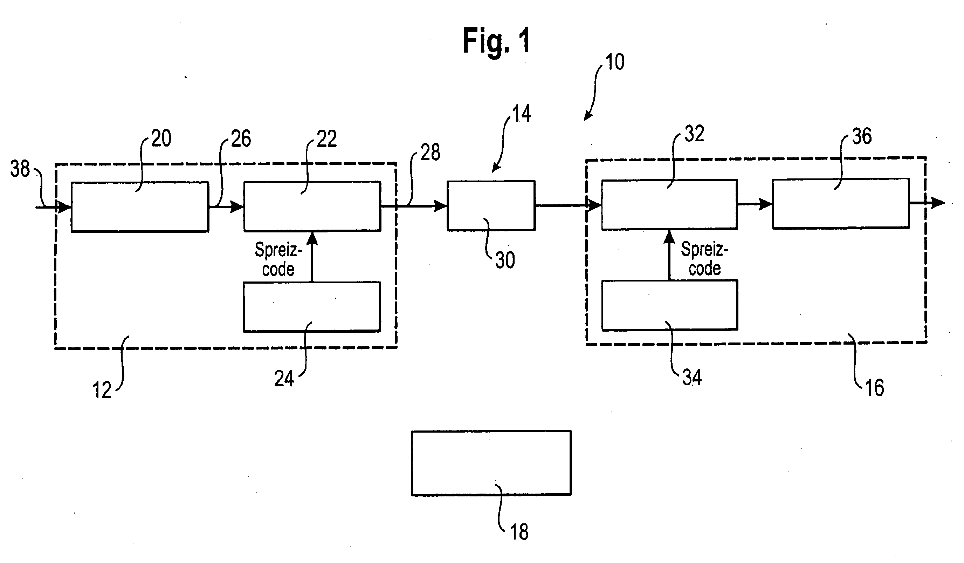

Figur 1 zeigt in schematischer Teildarstellung eine beispielhafte Ausführungsform eines optoelektronischen Sensors 10 mit wenigstens einem Lichtsender 12 zur Aussendung von Lichtsignalen in einen Überwachungsbereich 14, wenigstens einem Lichtempfänger 16 zum Empfangen von vom Lichtsender 12 ausgesandten Lichtsignalen 28 und einer Lichtsender 12 und Lichtempfänger 16 zugeordneten Steuereinrichtung 18.

In der Figur 1 ist nur ein Lichtsender 12 sowie nur ein Lichtempfänger 16 und entsprechend nur ein Kanal 30 dargestellt. Der optoelektronische Sensor 12 kann jedoch insbesondere auch eine Mehrzahl von Lichtsendern und Lichtempfängern umfassen, die insbesondere in einer Lichtgitteranordnung vorgesehen sein können. Der optoelektronische Sensor 10 kann also insbesondere auch mehrere Kanäle aufweisen. Dabei kann insbesondere auch jeweils mehreren Lichtsendern 12 ein gemeinsamer Lichtempfänger 16 zugeordnet sein, wie dies weiter unten näher erläutert wird.

Die Steuereinrichtung 18 umfasst Mittel zur Erzeugung und/oder Beeinflussung der Lichtsignale 28 und zur Erzeugung eines Objektfeststellungssignals im Falle des Vorhandenseins eines Objektes im Überwachungsbereich 14 in Abhängigkeit von den Ausgangssignalen des Lichtempfängers 16.

Die von dem Lichtsender 12 in den Überwachungsbereich ausgesandten Lichtsignale 28 sind jeweils durch ein nach dem Bandspreizverfahren mit einem Pseudozufallsrauschcode moduliertes Ausgangssignal 26 erzeugt.

Wie anhand der Fig. 1 zu erkennen ist, kann der Lichtsender 12 insbesondere einen Kanalcodierer 20, einen Modulator 22 und einen Pseudozufallsrauschgenerator 24 umfassen.

Dabei wird über den Kanalcodierer 20 ein dem Lichtsender 12 zugeordnetes Ausgangssignal 26 erzeugt, das durch den vom Pseudozufallsrauschgenerator 24 beaufschlagten Modulator 22 nach dem Bandspreizverfahren mit einem durch einen Pseudozufallsrauschcode gebildeten Spreizcode moduliert wird. Das entsprechend modulierte Ausgangssignal wird dann als Lichtsignal 28 in den Überwachungsbereich 14 ausgesandt bzw. über den betreffenden Kanal 30 vom Lichtempfänger 16 empfangen, sofern der betreffende Lichtpfad nicht durch ein sich im Überwachungsbereich 14 befindliches Objekt unterbrochen wird.

Der Lichtempfänger 16 umfasst einen Demodulator 32, einen diesen mit einem entsprechenden Spreiz- bzw. Pseudozufallsrauschcode beaufschlagenden Pseudozufallsrauschgenerator 34 sowie einen Kanaldecoder 36. Dabei wird der Demodulator 32 durch den Pseudozufallsrauschgenerator 34 zur Identifizierung oder Rückgewinnung des dem Lichtsender 12 zugeordneten Ausgangssignals 26 mit dem dem Lichtsender 12 zugeordneten Pseudozufallsrauschcode beaufschlagt.

Dem Kanalcodierer 20 des Lichtsenders 12 kann also ein Eingangssignal 38 zugeführt werden, um beispielsweise ein analoges Ausgangssignal 26 geringer Bandbreite zu erzeugen. Das Ausgangssignal 26 wird unter Verwendung insbesondere einer Ziffern- oder Binärzahlfolge in Form eines Pseudozufallsrauschcodes moduliert. Über diesen Pseudozufallsrauschcode wird das Spektrum des Ausgangssignals 26 gespreizt, wodurch die Bandbreite entsprechend erhöht wird. Auf der Seite des Lichtempfängers 16 wird ein entsprechender Pseudozufallsrauschcode zur Demodulation des empfangenen, mit einem gespreizten Spektrum versehenen Signals verwendet. Anschließend wird das demodulierte Signal dem Kanaldecoder 36 zur Datenrückgewinnung oder -identifizierung zugeführt.

Der Pseudozufallsrauschcode kann insbesondere über ein so genanntes primitives Polynom erzeugt sein. Dabei umfasst dieser Pseudozufallsrauschcode bevorzugt zumindest eine der folgenden Sequenzen:

-    M-Sequenzen,
-    Gold-Sequenzen,
-    Kasami-Sequezen,
-    Hadamard-Walsh-Sequenzen,
-    Barker-Sequenzen.

Die von dem Lichtsender 12 in den Überwachungsbereich 14 ausgesandten Lichtsignale 28 können jeweils insbesondere durch ein nach dem DSSS-(Direct Sequence Spread Spectrum)-Bandspreizverfahren mit dem Pseudozufallsrauschcode moduliertes Ausgangssignal erzeugt sein. Dabei können die von dem Lichtsender 12 in den Überwachungsbereich 14 ausgesandten Lichtsignale 28 insbesondere jeweils durch wenigstens einen mit dem Pseudozufallsrauschcode gemischten oder multiplizierten Lichtpuls erzeugt sein. Als Ausgangssignal kann jeweils ein Lichtpuls vorgesehen sein.

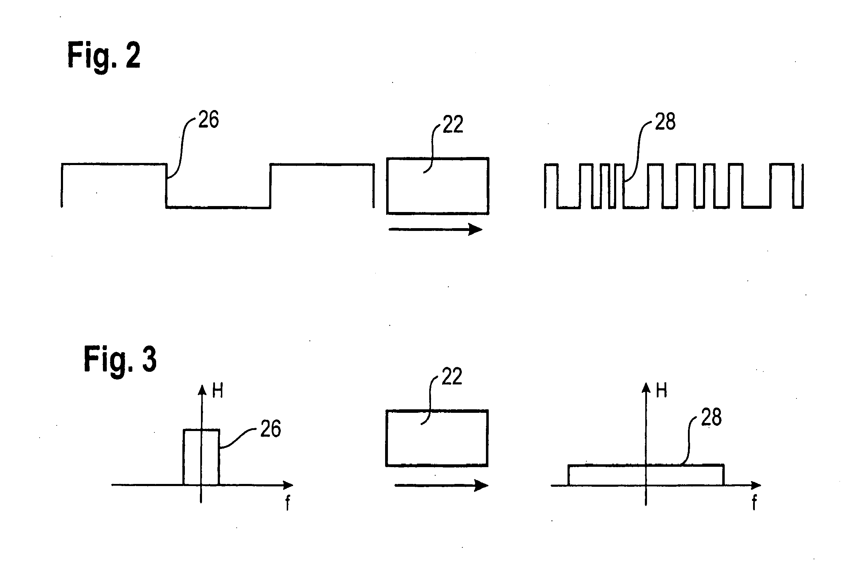

Das Prinzip des zur Bandspreizung anwendbaren DSSS-Verfahrens ist in der Figur 2 veranschaulicht.

Danach kann jedes Bit eines jeweiligen eingehenden Datenstroms durch eine Mehrzahl von Bits in dem in den Überwachungsbereich 14 ausgesandten Lichtsignal 28 repräsentiert sein, das unter Verwendung eines Pseudozufallsrauschcodes als Spreizcode erzeugt wurde.

Bei einer Betrachtung im Zeitbereich gilt, dass die Spreizrate, mit der die Bits des Ausgangssignals 26 (vgl. auch Figur 1) zur Bildung des in den Überwachungsbereich 14 ausgesandten Lichtsignals 28 gespreizt werden, gleich dem N-fachen der Bit-Rate des Ausgangssignals 26 ist, wobei N die Anzahl von Bits des Pseudozufallsrauschcodes angibt, mit der ein jeweiliges Bit des Ausgangssignals 26 codiert wird.

Figur 3 zeigt die Frequenzspektren des in der Figur 2 dargestellten Ausgangssignals 26 und des in Figur 2 dargestellten, nach dem DSSS-Bandspreizverfahren mit dem Pseudozufallsrauschcode modulierten Ausgangssignals, das heißt des Lichtsignals 28. Dabei gilt für den Frequenzbereich, dass die Bandbreite des in den Überwachungsbereich 14 gesendeten Lichtsignals 28 gleich der N-fachen Datenbandbreite des Ausgangssignals 26 ist.

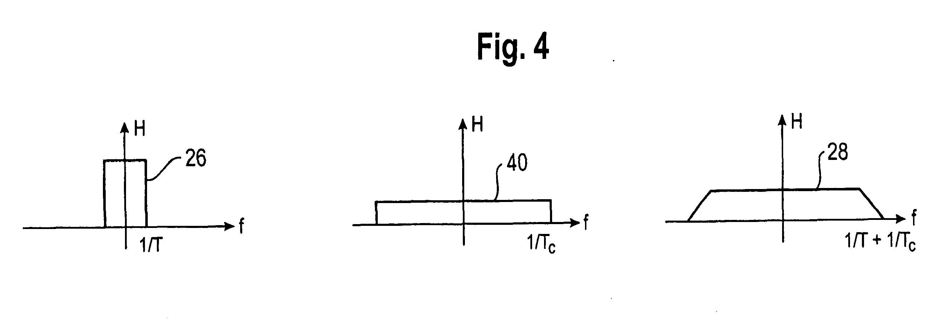

Figur 4 zeigt die Energiespektren des Ausgangssignals 26, des Pseudozufallsrauschcodes 40 und des nach dem DSSS-Bandspreizverfahren mit dem Pseudozufallsrauschcode modulierten Ausgangssignals, das heißt des in den Überwachungsbereich 14 ausgesandten Lichtsignals 28.

Die Steuereinrichtung 18 (vgl. Figur 1) kann Mittel umfassen, um zur Identifizierung oder Rückgewinnung des einem jeweiligen Lichtsender 12 zugeordneten Ausgangssignals die Autokorrelationsfunktion zwischen dem empfangenen Lichtsignal und dem betreffenden Pseudozufallsrauschcode zu bilden.

Wie bereits erwähnt, können verschiedenen Lichtsendern 12 unterschiedliche Pseudozufallsrauschcodes zugeordnet sein. Dabei kann insbesondere jeweils zumindest zwei, vorzugsweise jeweils zumindest drei Lichtsendern 12 ein gemeinsamer Lichtempfänger 16 zugeordnet sein.

Ist verschiedenen Lichtsendern 12, denen unterschiedliche Pseudozufallsrauschcodes zugeordnet sind, ein gemeinsamer Lichtempfänger 16 zugeordnet, so können die von dem gemeinsamen Lichtempfänger 16 empfangenen Lichtsignale und/oder ein daraus gebildetes Signal zur Identifizierung oder Rückgewinnung der den jeweiligen Lichtsendern 12 zugeordneten Ausgangssignale 26 mit den den betreffenden Lichtsendern 12 zugeordneten Pseudozufallsrauschcodes beaufschlagt werden.

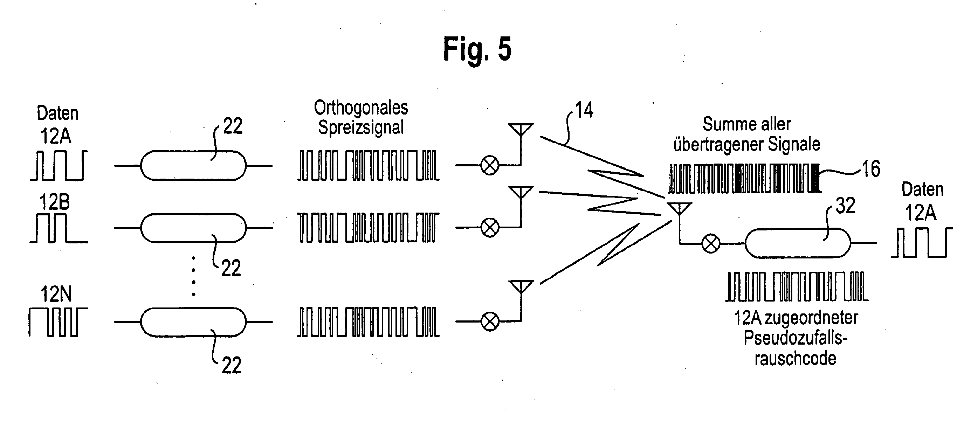

In Figur 5 ist das Prinzip eines hierzu verwendbaren Codemultiplexverfahrens, das heißt CDMA-(Code Division Multiple Access)-Verfahrens veranschaulicht.

Danach können gleichzeitig unterschiedliche Lichtsender 12A, 12B bis 12N Lichtsignale unter Verwendung des jeweiligen Kanals 14 aussenden. Dabei sind den verschiedenen Sendern 12A bis 12N verschiedene Pseudozufallsrauschcodes zugeordnet. Entsprechend werden durch unterschiedliche Codierer oder Modulatoren 22 unterschiedliche orthogonale Spreizsignale erzeugt, die dann in den Überwachungsbereich 14 ausgesandt und über den jeweiligen Kanal 30 zum gemeinsamen Lichtempfänger 16 gelangen, der die Summe aller übertragenen Signale empfängt. Über einen jeweiligen Korrelator oder Demodulator 32 können dann die Daten bzw. das Ausgangssignal eines jeweiligen Lichtsenders 12A - 12N wiedergewonnen oder identifiziert werden, wozu der Demodulator 32 in der beschriebenen Weise mit dem den betreffenden Lichtsender zugeordneten Pseudozufallsrauschcode beaufschlagt wird. Im vorliegenden Fall wird der Korrelator bzw. Demodulator 32 durch den dem Lichtsender 12A zugeordneten Pseudozufallsrauschcode beaufschlagt, sodass dessen Ausgangssignal identifiziert oder wiedergewonnen wird.

Mit diesem CDMA- oder Codemultiplexverfahren wird also eine Multiplex-Technik eingesetzt, die ein gespreiztes Spektrum mit sich bringt.

Dabei wird jedes Bit eines jeweiligen Ausgangssignals in k sogenannte Chirps oder Chips entsprechend einem für den jeweiligen Lichtsender 12 vorgebbaren spezifischen Muster aufgebrochen. Es gilt die Beziehung

$$\text{Chip-Datenrate des neuen Kanals} = k \cdot D \cdot \text{Chips/sec},$$

wobei k = Anzahl der Chips,
D = Rate des Daten- oder Ausgangssignals.

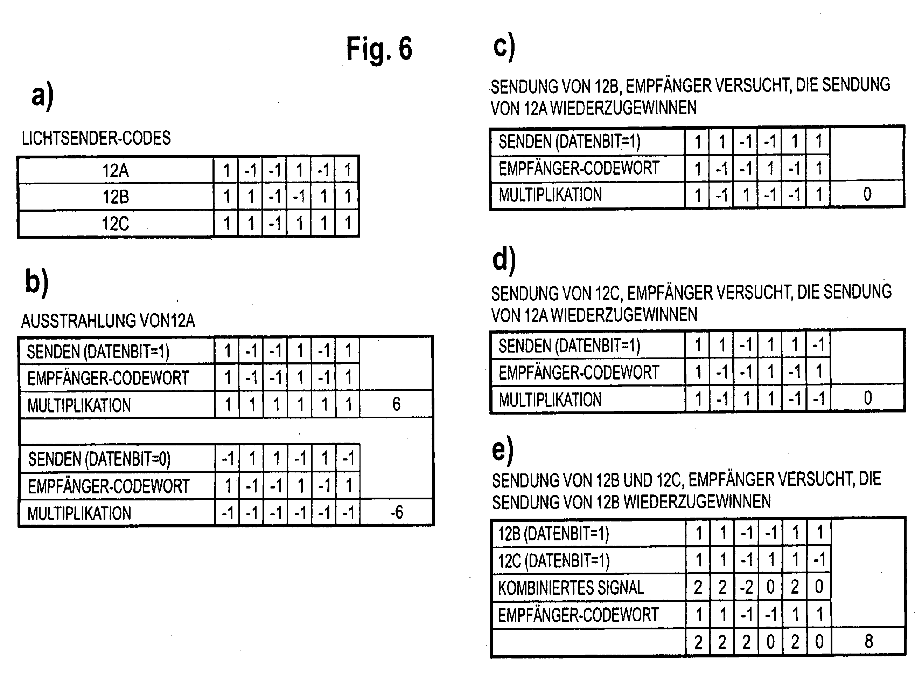

Figur 6 zeigt eine beispielhafte Anwendung eines solchen Codemultiplexverfahrens auf einen optoelektronischen Sensor, bei dem z.B. jeweils drei Lichtsendern 12A, 12B ein gemeinsamer Lichtempfänger zugeordnet ist.

Dabei sind den Lichtsendern 12A, 12B und 12C gemäß Figur 6a) unterschiedliche Pseudozufallsrauschcodes zugeordnet. Diese umfassen beispielsweise jeweils sechs Bits.

In Figur 6b) sind ausgesandte Lichtsignale und empfangsseitig wiedergewonnene Signale für den Fall gezeigt, dass der Lichtsender 12A ein mit dem ihm zugeordneten Pseudozufallsrauschcode multipliziertes Datenbit aussendet. Dabei wird das Datenbit einzeln mit den hier beispielsweise sechs Bits des Pseudozufallscodes multipliziert, wodurch sich ein sechs Bits umfassendes auszusendendes moduliertes Lichtsignal ergibt.

Ist das Datenbit gleich 1, so besitzen nach der Multiplikation die Bits des auszusenden Lichtsignals jeweils den Wert des entsprechenden Bits des Pseudozufallscodes. Empfangsseitig wird das empfangene Lichtsignal zur Demodulation bitweise mit demselben Pseudozufallscode multipliziert. Das entsprechend demodulierte Signal besitzt ebenfalls wieder sechs Bits, die im vorliegenden Fall jeweils den Wert 1 besitzen, was in der Summe den Wert 6 ergibt, womit das übertragene Datenbit 1 identifiziert ist.

Ist das Datenbit dagegen gleich 0, so werden zur Bildung des auszusendenden Lichtsignals die Vorzeichen der Bits des Pseudozufallscodes jeweils invertiert. Empfangsseitig wird das empfangene Lichtsignal zur Demodulation wieder bitweise mit demselben Pseudozufallscode multipliziert. Das entsprechend demodulierte Signal besitzt ebenfalls wieder sechs Bits, die im vorliegenden Fall jedoch den Wert -1 besitzen, was in der Summe den Wert -6 ergibt, womit das übertragene Datenbit 0 identifiziert ist.

Figur 6c) betrifft den Fall, dass vom Lichtsender 12B ein Lichtsignal ausgesandt wird, das durch ein mit dem zugeordneten Pseudozufallscode moduliertes Datenbit 1 erzeugt ist, und empfangsseitig versucht wird, ein vom Lichtsender 12A stammendes Datensignal wiederzugewinnen. Empfangsseitig wird das empfangene Lichtsignal zur Demodulation also bitweise nicht mit dem dem Lichtsender 12B, sondern mit dem dem Lichtsender 12A zugeordneten Pseudozufallscode multipliziert. Das sich ergebende Signal besitzt wieder sechs Bits, die in der Summe jedoch den Wert 0 ergeben, was bedeutet, dass hier kein Datensignal identifiziert wurde.

Figur 6d) betrifft den Fall, dass vom Lichtsender 12C ein Lichtsignal ausgesandt wird, das durch ein mit dem zugeordneten Pseudozufallscode moduliertes Datenbit 1 erzeugt ist, und empfangsseitig versucht wird, ein vom Lichtsender 12A stammendes Datensignal wiederzugewinnen. Empfangsseitig wird das empfangene Lichtsignal zur Demodulation also bitweise nicht mit dem dem Lichtsender 12C, sondern mit dem dem Lichtsender 12A zugeordneten Pseudozufallscode multipliziert. Das sich ergebende Signal besitzt wieder sechs Bits, die in der Summe jedoch wieder den Wert 0 ergeben, was bedeutet, dass hier kein Datensignal identifiziert wird.

Figur 6e) betrifft den Fall, dass sowohl vom Lichtsender 12B als auch vom Lichtsender 12C jeweils ein Lichtsignal ausgesandt wird, das jeweils durch ein mit dem jeweils zugeordneten Pseudozufallscode moduliertes Datenbit 1 erzeugt ist, und empfangsseitig versucht wird, ein vom Lichtsender 12B stammendes Datensignal wiederzugewinnen. Dabei ergibt sich zunächst ein kombiniertes Signal, dessen sechs Stellen jeweils einen Wert besitzen, der der Summe der betreffenden Bits der Lichtsignale der beiden Lichtsender 12B und 12C entspricht. Empfangsseitig werden dann die Werte der einzelnen Stellen dieses kombinierten Signals bitweise mit dem dem Lichtempfänger 12B zugeordneten Pseudozufallscode multipliziert. Das sich ergebende Signal besitzt sechs Stellen, die in der Summe den Wert 8 ergeben.

Die beiden den Lichtsendern 12A und 12B zugeordneten Pseudozufallscodes sind also orthogonal. Auch die den Lichtsendern 12A und 12C zugeordneten Pseudozufallscodes sind orthogonal. Dagegen sind die den Lichtsendern 12B und 12C zugeordneten Pseudozufallscodes nicht orthogonal.

Die Steuereinrichtung 18 (vgl. Figur 1) kann zudem Mittel umfassen, um einen variablen zeitlichen Versatz zwischen dem betreffenden Pseudozufallsrauschcode und dem durch diesen beaufschlagten empfangenen Lichtsignal so einzustellen, dass sich für die Autokorrelationsfunktion ein Maximalwert ergibt.

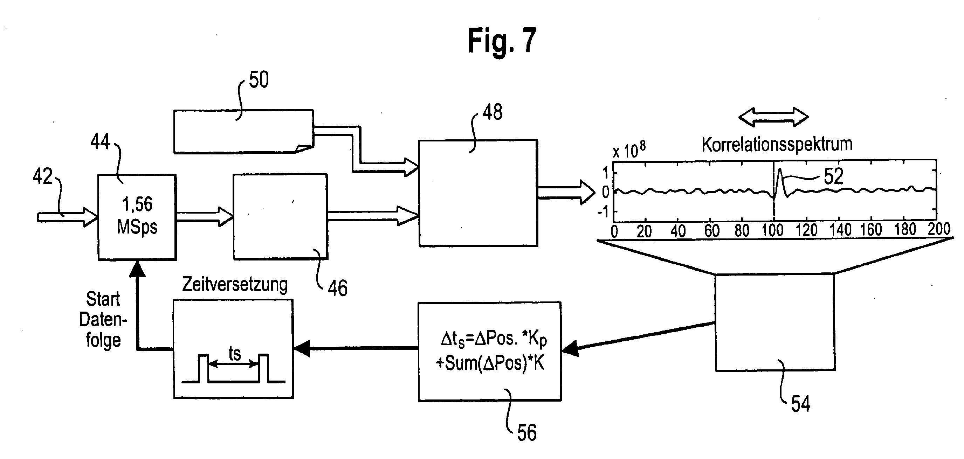

Figur 7 zeigt in schematischer Darstellung einen ersten Abschnitt einer beispielhaften Synchronisation eines Lichtempfängers mit einem Lichtsender.

Wie anhand der Figur 7 zu erkennen ist, wird ein Eingangssignal 42 einem A/D-Wandler 44 zugeführt, auf den eine Offset-Korrektur 46 folgt, deren Ausgangssignal einem Korrelator 48 zugeführt wird, der zudem Referenzdaten aus einer Referenztabelle 50 erhält. Der Korrelator 48 liefert schließlich ein Korrelationsspektrum. Dabei wird die Spitze 52 mit ausreichendem Störabstand erfasst, wozu ein entsprechender Positions- und Störabstandsdetektor 54 vorgesehen ist, der wiederum einen PI-Controller 56 beaufschlagt, der den jeweiligen Zeitversatz ts vorgibt, um den A/D-Wandler 44 zur Bestimmung des Startzeitpunktes der eingehenden Datenfolge entsprechend anzusteuern.

Bei der vorliegenden Synchronisation wird also die Spitze des Korrelationsspektrums mit hinreichendem Störabstand erfasst. Mit einem Start des PI-Controllers 56 wird die Spitze 52 auf die Mitte des Korrelationsspektrums eingestellt. Zur entsprechenden Signalerfassung erfolgt die Abtastung durch den A/D-Wandler 44 bei verschiedenen durch die Abtastzeit vorgegebenen Wiederholungszeiten. Ist das betreffende Signal erfasst, so wird die Abtastzeit durch den PI-Controller 56 eingestellt. Die verschiedenen in der Figur 7 zu erkennenden Elemente können zumindest teilweise der Steuereinrichtung 18 (vgl. Figur 1) zugeordnet sein.

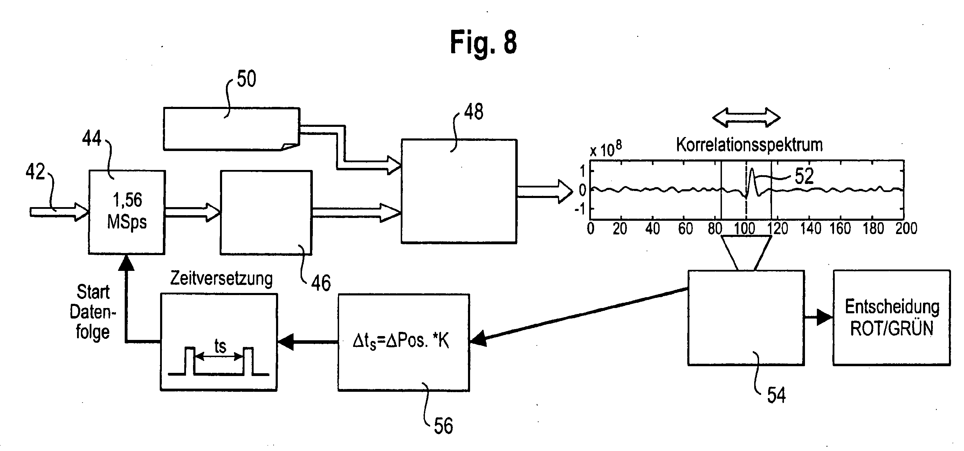

Figur 8 zeigt in schematischer Darstellung einen weiteren Abschnitt der Synchronisation des Lichtempfängers mit dem Lichtsender.

Dabei ist die Synchronisation beendet, wenn die Spitze 52 des Korrelationsspektrums zeitlich stabil ist. Es wird dann der Korrelationsvorgang begrenzt, um die Antwortzeit zu minimieren. Die Spitze 52 des Korrelationsspektrums ist stabil, wenn die Wiederholungsrate gleich der Versatzzeit ist. Der Zeitstempel eines anderen Strahls kann über die

Beziehung

$$t_S = t_S \, (\text{Sync}) / \text{Anzahl der Strahlen}$$

abgeleitet werden. Es sind dann alle Strahlen synchronisiert. Im Anschluss daran wird der Betrieb des Sicherheitslichtgitters aktiviert.

Im übrigen sind in der Figur 8 zumindest im Wesentlichen wieder die gleichen Elemente wie in Figur 7 zu erkennen, wobei einander entsprechenden Elementen gleiche Bezugszeichen zugeordnet sind.

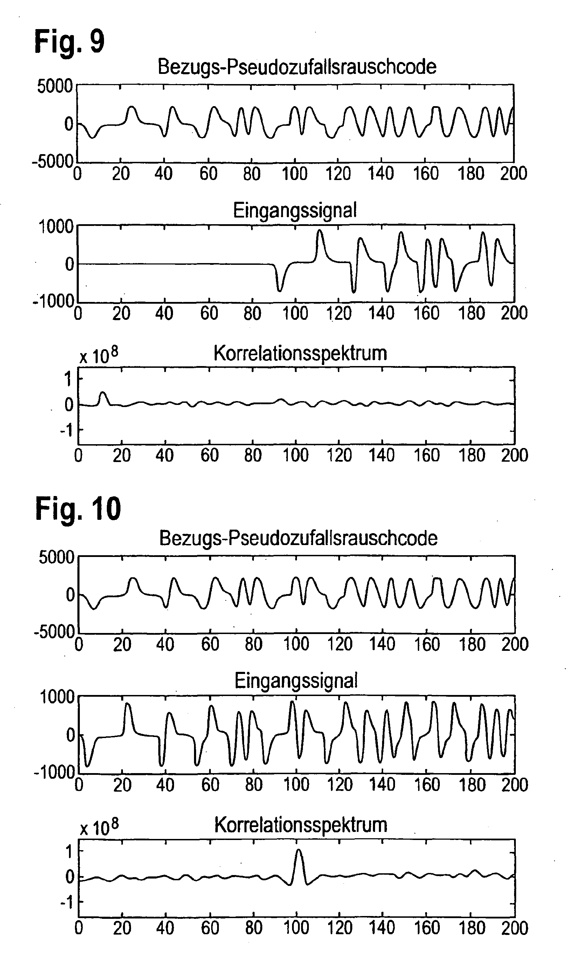

Figur 9 zeigt die Frequenzspektren eines Bezugs-Pseudozufallsrauschcodes und eines mit einem entsprechenden Pseudozufallsrauschcode modulierten Eingangssignals sowie ein sich aufgrund eines Vergleichs dieser beiden Signale ergebendes Korrelationsspektrum. Dabei lässt das Korrelationsspektrum noch keine Übereinstimmung der beiden Signale erkennen.

Figur 10 zeigt eine mit der Figur 9 vergleichbare Darstellung, wobei die beiden miteinander zu vergleichenden Signale jedoch relativ zueinander so versetzt sind, dass das Korrelationsspektrum eine Übereinstimmung der beiden Signale erkennen lässt.

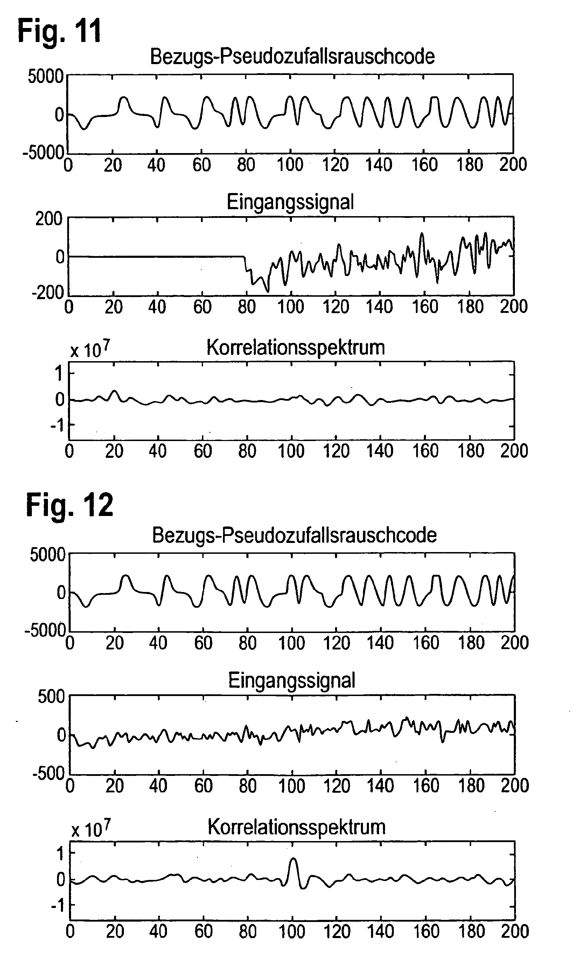

Figur 11 zeigt die Frequenzspektren eines Bezugs-Pseudozufallsrauschcodes und eines stark verrauschten, mit einem entsprechenden Pseudozufallsrauschcode modulierten Eingangssignals sowie ein sich aufgrund eines Vergleichs dieser beiden Signale ergebendes Korrelationsspektrum. Dabei lässt das Korrelationsspektrum noch keine Übereinstimmung der beiden Signale erkennen.

Figur 12 zeigt eine mit der Figur 11 vergleichbare Darstellung, wobei die beiden miteinander zu vergleichenden Signale jedoch relativ zueinander wieder so versetzt sind, dass das Korrelationsspektrum eine Übereinstimmung der beiden Signale erkennen lässt.

Dabei tritt sowohl beim Beispiel gemäß Figur 10 als auch beim Beispiel gemäß Figur 12 im Korrelationsspektrum jeweils eine Spitze im Bereich des Wertes "100" auf, woran sich eine entsprechende Übereinstimmung der beiden Signale erkennen lässt.

Die Pseudozufallscodes können insbesondere durch entsprechende Schieberegister erzeugt werden. Zur empfangsseitigen Decodierung können entsprechend abgestimmte Filter eingesetzt werden.

Wie bereits erwähnt, kann der optoelektronische Sensor 10 insbesondere eine Mehrzahl von Lichtsendern 12 und Lichtempfängern 16 in einer Lichtgitteranordnung umfassen. Dabei kann jeweils mehreren Lichtsendern 12 ein gemeinsamer Lichtempfänger 16 zugeordnet und entsprechend die Anzahl der Lichtempfänger 16 geringer sein als die Anzahl der Lichtsender 12. Lichtsender 12 und Lichtempfänger 16 können auf einander gegenüberliegenden Seiten des Überwachungsbereichs 14 angeordnet sein. Alternativ sind auch solche Ausführungen denkbar, bei denen Lichtsender 12 und Lichtempfänger 16 auf einer Seite des Überwachungsbereichs 14 und ein Retroreflektor auf der gegenüberliegenden Seite des Überwachungsbereichs 14 angeordnet sind. Dabei entspricht diese zweite Variante einer Autokollimationsanordnung.

Mit der erfindungsgemäßen Lösung wird eine Reihe von Vorteilen erzielt. So wird bei möglichst einfachem Aufbau und möglicht großer Reichweite insbesondere ein optimaler Störabstand gewährleistet. In einem jeweiligen Lichtgittern kann die aktive Empfangsfläche von Optiken deutlich reduziert werden. Es werden auch Empfangssignale mit kleineren Signalpegeln sicher empfangen.

Wie ebenfalls bereits erwähnt, kann der optoelektronische Sensor vorteilhafterweise auch wenigstens eine insbesondere sichere Kamera umfassen, der zur aktiven Beleuchtung des Überwachungsbereichs 14 wenigstens ein Lichtsender 12 zugeordnet ist, dessen in den Überwachungsbereich 14 ausgesandte Lichtsignale jeweils wieder durch eine nach dem Bandspreizverfahren mit einem Pseudozufallsrauschcode moduliertes Ausgangssignal erzeugt sind.

Dabei können der der Kamera zugeordnete Lichtsender 12 und/oder die Kamera durch die zugeordnete Steuereinrichtung 18 insbesondere so angesteuert sein, dass die aktive Beleuchtung synchron zur Belichtung der sensitiven Fläche der Kamera erfolgt.

Als Kamera kann insbesondere eine 3D-Stereoskopie-Kamera vorgesehen sein.

Mittels des der Kamera zugeordneten Lichtsenders 12 kann in dem beleuchteten Überwachungsbereich zweckmäßigerweise ein strukturiertes, kontrastreiches Muster erzeugt werden.

Wie ebenfalls bereits erwähnt, kann die Steuereinrichtung 18 insbesondere auch so ausgeführt sein, dass zur Erzeugung eines jeweiligen Objektfeststellungssignals jeweils zumindest eine zweifache Auswertung von Ausgangssignalen des Lichtempfängers 16 erfolgt. Dabei kann die Steuereinrichtung insbesondere so ausgeführt sein, dass ein jeweiliges Objektfeststellungssignal nur dann erzeugt wird, wenn zumindest zweimal zeitlich nacheinander festgestellt wurde, dass von dem Lichtempfänger 12 kein Lichtsignal empfangen wurde, das dem betreffenden Lichtsender zugeordnet werden kann.

Dabei kann die Steuereinrichtung 18 insbesondere Mittel umfassen, um jeweils zumindest zweimal zeitlich nacheinander zur Identifizierung eines jeweiligen dem betreffenden Lichtsender 12 zugeordneten Ausgangssignals 26 die Autokorrelationsfunktion zwischen dem jeweiligen empfangenen Lichtsignal und dem betreffenden Pseudozufallsrauschcode zu bilden.

Die wenigstens zwei für die zumindest zweifache Auswertung zeitlich nacheinander von dem betreffenden Lichtsender 12 ausgesandten Lichtsignale können zeitlich so versetzt sein, dass sich ein unterschiedlicher zeitlicher Versatz zwischen dem Pseudozufallsrauschcode und den betreffenden, durch diesen Pseudozufallsrauschcode beaufschlagten empfangenen Lichtsignalen ergibt.

Für die zumindest zwei Auswertungen können insbesondere auch unterschiedliche Chipdauern für den jeweiligen Pseudozufallsrauschcode gewählt sein.

Für jedes von dem Lichtsender 12 ausgesandte Lichtsignal kann empfangsseitig eine definierte Detektionsschwelle vorgesehen sein.

Die Länge der Pseudozufallsrauschcodefolge kann in Abhängigkeit von der Anzahl von sich nicht überlappenden, zur selben Zeit aktivierten ausgesandten Lichtsignalen gewählt sein.

Der Pseudozufallsrauschcode kann zur Realisierung eines kombinierten TDMA- und CDMA-Systems in zumindest zwei Chipfolgen aufgeteilt sein.

## Bezugszeichenliste

| | |
|---|---|
| 10 | optoelektronischer Sensor |
| 12 | Lichtsender |
| 14 | Überwachungsbereich |
| 16 | Lichtempfänger |
| 18 | Steuereinrichtung |
| 20 | Kanalcodierer |
| 22 | Modulator |
| 24 | Pseudozufallsrauschgenerator |
| 26 | Ausgangssignal |
| 28 | Lichtsignal |
| 30 | Kanal |
| 32 | Demodulator |
| 34 | Pseudozufallsrauschgenerator |
| 36 | Kanaldecoder |
| 38 | Eingangssignal |
| 40 | Pseudozufallsrauschcode |
| 42 | Eingangssignal |
| 44 | A/D-Wandler |
| 46 | Offset-Korrektur |
| 48 | Korrelator |
| 50 | Referenztabelle |
| 52 | Spitze |
| 54 | Positions- und Störabstandsdetektor |
| 56 | PI-Controller |

## Patentansprüche

**1.** Optoelektronischer Sensor (10) mit wenigstens einem Lichtsender (12) zur Aussendung von Lichtsignalen in einen Überwachungsbereich (14), wenigstens einem Lichtempfänger (16) zum Empfang von vom Lichtsender (12) ausgesandten Lichtsignalen und einer Steuereinrichtung (18) zur Erzeugung und/oder Beeinflussung der Lichtsignale und zur Erzeugung eines Objektfeststellungssignals im Falle des Vorhandenseins eines Objektes im Überwachungsbereich (14) in Abhängigkeit von den Ausgangssignalen des Lichtempfängers,
**dadurch gekennzeichnet,**
**dass** die von dem Lichtsender (12) in den Überwachungsbereich (14) ausgesandten Lichtsignale jeweils durch ein nach dem Bandspreizverfahren mit einem Pseudozufallsrauschcode moduliertes Ausgangssignal erzeugt sind und
**dass** das von dem Lichtempfänger (12) empfangene Lichtsignal zur Identifizierung des einem jeweiligen Lichtsender zugeordneten Ausgangssignals (26) mit dem dem betreffenden Lichtsender (12) zugeordneten Pseudozufallsrauschcode beaufschlagbar ist, wobei die Steuereinrichtung (18) Mittel umfasst, um zur Identifizierung des einem jeweiligen Lichtsender (12) zugeordneten Ausgangssignals (26) die Autokorrelationsfunktion zwischen dem empfangenen Lichtsignal und dem betreffenden Pseudozufallsrauschcode zu bilden, und Mittel umfasst, um den variablen zeitlichen Versatz zwischen dem Pseudozufallsrauschcode und dem durch diesen beaufschlagten empfangenen Lichtsignal so einzustellen, dass sich für die Autokorrelationsfunktion ein Maximalwert ergibt.

2. Optoelektronischer Sensor nach Anspruch 1,
**dadurch gekennzeichnet,**
**dass** der Pseudozufallsrauschcode über ein so genanntes primitives Polynom erzeugt ist, und/oder
**dass** der Pseudozufallsrauschcode eine M-Sequenz umfasst, und/ oder
**dass** der Pseudozufallsrauschcode eine Gold-Sequenz umfasst

3. Optoelektronischer Sensor nach einem der vorhergehenden Ansprüche,
**dadurch gekennzeichnet,**
**dass** der Pseudozufallsrauschcode eine Kasami-Sequenz umfasst, und/oder
**dass** der Pseudozufallsrauschcode eine Hadamard-Walsh-Sequenz umfasst, und/oder
**dass** der Pseudozufallsrauschcode eine Barker-Sequenz umfasst.

4. Optoelektronischer Sensor nach einem der vorhergehenden Ansprüche,
**dadurch gekennzeichnet,**
**dass** die von dem Lichtsender (12) in den Überwachungsbereich (14) ausgesandten Lichtsignale (28) jeweils durch ein nach dem DSSS (Direct Sequence Spread Spectrum)-Bandspreizverfahren mit dem Pseudozufallsrauschcode moduliertes Ausgangssignal erzeugt sind, und/ oder
**dass** die von dem Lichtsender (12) in den Überwachungsbereich (14) ausgesandten Lichtsignale (28) jeweils durch wenigstens einen mit dem Pseudozufallsrauschcode gemischten Lichtpuls erzeugt sind.

5. Optoelektronischer Sensor nach einem der vorhergehenden Ansprüche,
**dadurch gekennzeichnet,**
**dass** verschiedenen Lichtsendern (12) unterschiedliche Pseudozufallsrauschcodes zugeordnet sind, und/oder
**dass** jeweils zumindest zwei Lichtsendern (12) ein gemeinsamer Lichtempfänger (16) zugeordnet ist, und/oder
**dass** jeweils zumindest drei Lichtsendern (12) ein gemeinsamer Lichtempfänger (16) zugeordnet ist.

6. Optoelektronischer Sensor nach einem der vorhergehenden Ansprüche,
**dadurch gekennzeichnet,**
**dass** verschiedenen Lichtsendern (12), denen unterschiedliche Pseudozufallsrauschcodes zugeordnet sind, ein gemeinsamer Lichtempfänger (16) zugeordnet ist und dass die von dem gemeinsamen Lichtempfänger (16) empfangenen Lichtsignale und/oder ein daraus gebildetes Signal zur Identifizierung der den jeweiligen Lichtsendern (12) zugeordneten Ausgangssignale (26) mit den den betreffenden Lichtsendern (12) zugeordneten Pseudozufallsrauschcodes beaufschlagbar sind.

7. Optoelektronischer Sensor nach einem der vorhergehenden Ansprüche,
**dadurch gekennzeichnet,**
**dass** Lichtsender (12) und Lichtempfänger (16) auf einander gegenüberliegenden Seiten des Überwachungsbereichs (14) angeordnet sind.

8. Optoelektronischer Sensor nach einem der Ansprüche 1 bis 6,
**dadurch gekennzeichnet,**
**dass** Lichtsender (12) und Lichtempfänger (16) auf einer Seite des Überwachungsbereichs (14) und ein Retroreflektor auf der gegenüberliegenden Seite des Überwachungsbereichs (14) angeordnet sind.

9. Optoelektronischer Sensor nach einem der vorhergehenden Ansprüche,
**dadurch gekennzeichnet,**
**dass** eine Mehrzahl von Lichtsendern (12) und Lichtempfängern (16) in einer Lichtgitteranordnung vorgesehen sind, und/oder dass jeweils mehreren Lichtsender (12) ein gemeinsamer Lichtempfänger (16) zugeordnet ist und entsprechend die Anzahl der Lichtempfänger (16) geringer ist als die Anzahl der Lichtsender (12).

10. Optoelektronischer Sensor nach einem der vorhergehenden Ansprüche,
**dadurch gekennzeichnet,**

**dass** er wenigstens eine Kamera umfasst, dem zur aktiven Beleuchtung des Überwachungsbereichs (14) der wenigstens eine Lichtsender (12) zugeordnet ist, dessen in den Überwachungsbereich (14) ausgesandte Lichtsignale jeweils durch ein nach dem Bandspreizverfahren mit einem Pseudozufallsrauschcode moduliertes Ausgangssignal erzeugt sind, wobei vorzugsweise der der Kamera zugeordnete Lichtsender (12) und/oder die Kamera durch die zugeordnete Steuereinrichtung (18) so angesteuert sind, dass die aktive Beleuchtung synchron zur Belichtung der sensitiven Fläche der Kamera erfolgt und/oder vorzugsweise als Kamera eine 3D-Stereoskopie-Kamera vorgesehen ist.

**11.** Optoelektronischer Sensor nach Anspruch 10,
**dadurch gekennzeichnet,**
**dass** Mittel vorgesehen sind, um mittels des der Kamera zugeordneten Lichtsenders (12) in dem beleuchteten Überwachungsbereich (14) ein strukturiertes, insbesondere kontrastreiches Muster zu erzeugen.

**12.** Optoelektronischer Sensor nach einem der vorhergehenden Ansprüche,
**dadurch gekennzeichnet,**
**dass** die Steuereinrichtung (18) so ausgeführt ist, dass zur Erzeugung eines jeweiligen Objektfeststellungssignals jeweils zumindest eine zweifache Auswertung von Ausgangssignalen des Lichtempfängers (16) erfolgt, wobei vorzugsweise die Steuereinrichtung (18) so ausgeführt ist, dass ein jeweiliges Objektfeststellungssignal nur dann erzeugt wird, wenn zumindest zweimal zeitlich nacheinander festgestellt wurde, dass von dem Lichtempfänger (12) kein Lichtsignal empfangen wurde, das dem betreffenden Lichtsender (12) zugeordnet werden kann, wobei vorzugsweise die Steuereinrichtung (18) Mittel umfasst, um jeweils zumindest zweimal zeitlich nacheinander zur Identifizierung eines jeweiligen dem betreffenden Lichtsender (12) zugeordneten Ausgangssignals (26) die Autokorrelationsfunktion zwischen dem jeweiligen empfangenen Lichtsignal und dem betreffenden Pseudozufallsrauschcode zu bilden, wobei vorzugsweise die wenigstens zwei für die zumindest zweifache Auswertung zeitlich nacheinander von dem betreffenden Lichtsender (12) ausgesandten Lichtsignale zeitlich so versetzt sind, dass sich ein unterschiedlicher zeitlicher Versatz zwischen dem Pseudozufallsrauschcode und den betreffenden, durch diesen Pseudozufallsrauschcode beaufschlagten empfangenen Lichtsignalen ergibt.

**13.** Optoelektronischer Sensor nach Anspruch 12,
**dadurch gekennzeichnet,**
**dass** für die zumindest zwei Auswertungen unterschiedliche Chipdauern für den jeweiligen Pseudozufallsrauschcode gewählt sind, und/ oder
**dass** für jedes vom dem Lichtsender (12) ausgesandte Lichtsignal empfangsseitig eine definierte Detektionsschwelle vorgesehen ist, und/oder
**dass** die Länge der Pseudozufallsrauschcodefolge in Abhängigkeit von der Anzahl von sich nicht überlappenden, zur selben Zeit aktivierten ausgesandten Lichtsignalen gewählt ist.

**14.** Optoelektronischer Sensor nach Anspruch 12 oder 13,
**dadurch gekennzeichnet,**
**dass** der Pseudozufallsrauschcode zur Realisierung eines kombinierten Zeitmultiplex- und Codemultiplex-Systems in zumindest zwei Chipfolgen aufgeteilt ist.


**Claims**

**1.** An optoelectronic sensor (10) having at least one light transmitter (12) for the transmission of light signals into a monitored zone (14), at least one light receiver (16) for the reception of light signals transmitted by the light transmitter (12) and a control unit (18) for the generation and/or influencing of the light signals and for the generation of an object detection signal in the case of the presence of an object in the monitored zone (14) in dependence on the output signals of the light receiver,
**characterized in that**
the light signals transmitted into the monitored zone (14) by the light transmitter (12) are each generated by an output signal modulated in accordance with the spread spectrum method using a random pseudo-noise code; and **in that** the light signal received by the light receiver (16) can be acted on by the random pseudo-noise code associated with the respective light transmitter (12) for the identification of the output signal (26) associated with a respective light transmitter; wherein the control unit (18) includes means to form the autocorrelation function between the received light signal and the respective random pseudo-noise code for the identification of the output signal (26) associated with a respective light transmitter (12) and includes means to set the variable time offset between the random pseudo-noise code and the received light signal acted on by it such that a maximum value results for the autocorrelation function.

2.  An optoelectronic sensor in accordance with claim 1,
    **characterized in that**
    the random pseudo-noise code is generated via a so-called primitive polynomial; and/or
    **in that** the random pseudo-noise code includes an M sequence; and/or
    **in that** the random pseudo-noise code includes a Gold sequence.

3.  An optoelectronic sensor in accordance with one of the preceding claims,
    **characterized in that**
    the random pseudo-noise code includes a Kasami sequence; and/or in that the random pseudo-noise code includes a Hadamard-Walsh sequence; and/or
    **in that** the random pseudo-noise code includes a Barker sequence.

4.  An optoelectronic sensor in accordance with any one of the preceding claims,
    **characterized in that**
    the light signals (28) transmitted into the monitored zone (14) by the light transmitter (12) are each generated by an output signal modulated in accordance with the DSSS (direct sequence spread spectrum) method using the random pseudo-noise code; and/or in that the light signals (28) transmitted into the monitored zone (14) by the light transmitter (12) are each generated by at least one light pulse mixed using the random pseudo-noise code.

5.  An optoelectronic sensor in accordance with any one of the preceding claims,
    **characterized in that**
    different random pseudo-noise codes are associated with different light transmitters (12); and/or
    **in that** a common light receiver (16) is associated with a respective at least two light transmitters (12); and/or
    **in that** a common light receiver (16) is associated with a respective at least three light transmitters (12).

6.  An optoelectronic sensor in accordance with any one of the preceding claims,
    **characterized in that**
    a common light receiver (16) is associated with different light transmitters (12) with which different random pseudo-noise codes are associated; and **in that** the light signals received by the common light receiver (16) and/or a signal formed therefrom for the identification of the output signals (26) associated with the respective light transmitters (12) are acted on by the random pseudo-noise codes associated with the respective light transmitters (12).

7.  An optoelectronic sensor in accordance with any one of the preceding claims,
    **characterized in that**
    the light transmitters (12) and the light receivers (16) are arranged on mutually oppositely disposed sides of the monitored zone (14).

8.  An optoelectronic sensor in accordance with any one of claims 1 to 6,
    **characterized in that**
    the light transmitters (12) and the light receivers (16) are arranged on one side of the monitored zone (14) and a retroreflector is arranged on the oppositely disposed side of the monitored zone (14).

9.  An optoelectronic sensor in accordance with any one of the preceding claims,
    **characterized in that**
    a plurality of light transmitters (12) and light receivers (16) are provided in a light grid arrangement; and/or
    **in that** a common light receiver (16) is associated with a respective plurality of light transmitters (12) and the number of light receivers (16) is correspondingly less than the number of light transmitters (12).

10. An optoelectronic sensor in accordance with any one of the preceding claims,
    **characterized in that**
    it includes at least one camera with which the at least one light transmitter (12) is associated for the active illumination of the monitored zone (14), with the light signals of said light transmitter transmitted into the monitored zone (14) being generated by an output signal modulated in accordance with the spread spectrum method using a random pseudo-noise code, wherein the light transmitter (12) associated with the camera and/or the camera are preferably controlled by the associated control unit (18) such that the active illumination takes place synchronously with the lighting of the sensitive surface of the camera; and/or a 3D stereoscopic camera is preferably provided as the camera.

11. An optoelectronic sensor in accordance with claim 10,
**characterized in that**
means are provided to generate a structured pattern, in particular a high-contrast pattern, in the illuminated monitored zone (14) by means of the light transmitter (12) associated with the camera.

12. An optoelectronic sensor in accordance with any one of the preceding claims,
**characterized in that**
the control unit (18) is designed such that at least one respective two-fold evaluation of output signals of the light receiver (16) takes place for the generation of a respective object detection signal, wherein the control unit (18) is preferably made such that a respective object detection signal is only generated when it was found at least twice sequentially in time that no light signal was received by the light receiver (16) which can be associated with the respective light transmitter (12), wherein the control unit (18) preferably includes means to form the autocorrelation function between the respective received light signal and the respective random pseudo-noise code at least twice sequentially in time for the identification of a respective output signal (26) associated with the respective light transmitter (12), wherein the at least two light signals transmitted by the respective light transmitter (12) for the at least two-fold evaluation sequentially in time are preferably offset in time such that a different time offset results between the random pseudo-noise code and the respective received light signals acted on by this random pseudo-noise code.

13. An optoelectronic sensor in accordance with claim 12,
**characterized in that**
different chip periods for the respective random pseudo-noise code are selected for the at least two evaluations; and/or
**in that**, at the reception side, a defined detection threshold is provided for each light signal transmitted by the light transmitter (12); and/or
**in that** the length of the random pseudo-noise code sequence is selected in dependence on the number of non-overlapping transmitted light signals activated at the same time.

14. An optoelectronic sensor in accordance with claim 12 or claim 13,
**characterized in that**
the random pseudo-noise code is split into at least two chip sequences for the realization of a combined time multiplex and code matrix system.

## Revendications

1. Capteur optoélectronique (10) comprenant au moins un émetteur de lumière (12) pour émettre des signaux lumineux dans une zone de surveillance (14), au moins un récepteur de lumière (16) pour la réception de signaux lumineux émis par l'émetteur de lumière (12), et un système de commande (18) pour engendrer et/ou influencer les signaux lumineux et pour engendrer un signal de constatation d'objet dans le cas de la présence d'un objet dans la zone de surveillance (14) en fonction des signaux de sortie du récepteur de lumière,
**caractérisé en ce que** les signaux lumineux émis par l'émetteur de lumière (12) vers la zone de surveillance (14) sont engendrés respectivement par un signal de sortie modulé selon un procédé d'étalement de spectre avec un code de bruit pseudo aléatoire, et
**en ce que** le signal lumineux reçu par le récepteur de lumière (12), pour identifier le signal de sortie (26) associé à un émetteur de lumière respectif, peut être affecté avec le code de bruit pseudo aléatoire associé à l'émetteur de lumière (12) concerné, et le système de commande (18) comprend des moyens, en vue d'identifier le signal de sortie (26) associé à un émetteur de lumière (12) respectif, pour former la fonction d'autocorrélation entre le signal lumineux reçu et le code de bruit pseudo aléatoire concerné et comprend des moyens afin de régler le décalage temporel variable entre le code de bruit pseudo aléatoire et le signal lumineux reçu affecté par ce code de telle manière qu'il en résulte une valeur maximum pour la fonction d'autocorrélation.

2. Capteur optoélectronique selon la revendication 1,
**caractérisé en ce que** le code de bruit pseudo aléatoire est engendré au moyen d'un polynôme dit primitif, et/ou le code de bruit pseudo aléatoire comprend une séquence M, et/ou le code de bruit pseudo aléatoire comprend une séquence de Gold.

**3.** Capteur optoélectronique selon la revendication 1,
**caractérisé en ce que**
le code de bruit pseudo aléatoire comprend une séquence de Kasami, et/ou
le code de bruit pseudo aléatoire comprend une séquence de Hadamard-Walsh, et/ou
le code de bruit pseudo aléatoire comprend une séquence de Barker.

**4.** Capteur optoélectronique selon l'une des revendications précédentes,
**caractérisé en ce que** les signaux lumineux (28) émis par l'émetteur de lumière (12) vers la zone de surveillance (14) sont engendrés respectivement par un signal de sortie modulé avec le code de bruit pseudo aléatoire suivant le procédé d'étalement de spectre DSSS (Direct Sequence Spread Spectrum), et/ou
les signaux lumineux (28) émis par l'émetteur de lumière (12) vers la zone de surveillance (14) sont respectivement engendrés par une impulsion de lumière mélangée avec le code de bruit pseudo aléatoire.

**5.** Capteur optoélectronique selon l'une des revendications précédentes, **caractérisé en ce que**
différents codes de bruit pseudo aléatoire sont associés à différents émetteurs de lumière (12), et/ou
un récepteur de lumière commun (16) est associé respectivement à au moins deux émetteurs de lumière (12), et/ou
un récepteur de lumière commun (16) est associé respectivement à au moins trois émetteurs de lumière (12).

**6.** Capteur optoélectronique selon l'une des revendications précédentes, **caractérisé en ce qu'**un récepteur de lumière commun (16) est associé à différents émetteurs de lumière (12) auquel sont associés différents codes de bruit pseudo aléatoire, et **en ce que** les signaux lumineux reçus par le récepteur de lumière (16) commun et/ou un signal formé à partir de ces signaux sont susceptibles d'être affectés avec le code de bruit pseudo aléatoire associé aux émetteurs de lumière (12) concernés en vue de l'identification des signaux de sortie (26) associés aux émetteurs de lumière (12) respectifs.

**7.** Capteur optoélectronique selon l'une des revendications précédentes, **caractérisé en ce que** l'émetteur de lumière (12) et le récepteur de lumière (16) sont agencés sur des côtés mutuellement opposés de la zone de surveillance (14).

**8.** Capteur optoélectronique selon l'une des revendications 1 à 6, **caractérisé en ce que** l'émetteur de lumière (12) et le récepteur de lumière (16) sont agencés sur un côté de la zone de surveillance (14), et un rétroréflecteur est agencé sur le côté opposé de la zone de surveillance (14).

**9.** Capteur optoélectronique selon l'une des revendications précédentes, **caractérisé en ce qu'**il est prévu une pluralité d'émetteurs de lumière (12) et de récepteurs de lumière (16) dans un agencement à grille de lumière, et/ou **en ce qu'**un récepteur de lumière (16) commun est associé respectivement à plusieurs émetteurs de lumière (12) et de manière correspondante le nombre des récepteurs de lumière (16) est plus faible que le nombre des émetteurs de lumière (12).

**10.** Capteur optoélectronique selon l'une des revendications précédentes,
**caractérisé en ce que**
il comprend au moins une caméra, à laquelle est associée ledit au moins un émetteur de lumière (12), pour l'éclairage actif de la zone de surveillance (14), dont les signaux lumineux émis vers la zone de surveillance (14) sont engendrés par un signal de sortie modulé avec un code de bruit pseudo aléatoire selon le procédé d'étalement de spectre, et l'émetteur de lumière (12) associé à la caméra et/ou la caméra sont de préférence pilotés par le système de commande (18) associé de telle façon que l'éclairage actif a lieu de manière synchrone à l'éclairage de la surface sensible de la caméra, et/ou **en ce qu'**il est prévu à titre de caméra une caméra stéréoscopique en 3D.

**11.** Capteur optoélectronique selon la revendication 10,
**caractérisé en ce qu'**il est prévu des moyens afin d'engendrer, au moyen de l'émetteur de lumière (12) associé à la caméra, un motif structuré, en particulier riche en contrastes, dans la zone de surveillance (14) éclairée.

**12.** Capteur optoélectronique selon l'une des revendications précédentes,
**caractérisé en ce que** le système de commande (18) est ainsi réalisé que, pour engendrer un signal de constatation d'objet respectif, il se produit respectivement une évaluation au moins double des signaux de sortie du récepteur de lumière (16), et le système de commande (18) est de préférence ainsi réalisé qu'un signal de constatation d'objet respectif n'est engendré que s'il a été constaté au moins deux fois temporellement l'une après l'autre que le récepteur de lumière (12) n'a reçu aucun signal lumineux qui puisse être associé à l'émetteur de lumière (12) concerné, et le système de commande (18) comprend de préférence des moyens, en vue d'identifier un signal de sortie (26) associé respectivement à l'émetteur de lumière (12) concerné, pour former au moins deux fois temporellement l'une après l'autre la fonction d'autocorrélation entre le signal lumineux respectivement reçu et le code de bruit pseudo aléatoire concerné, et lesdits au moins deux signaux lumineux émis temporellement l'un après l'autre par l'émetteur de lumière (12) concerné pour ladite évaluation au moins double sont de préférence décalés temporellement de telle manière qu'il en résulte un décalage temporel différent entre le code de bruit pseudo aléatoire et les signaux lumineux reçus concernés affectés de ce code de bruit pseudo aléatoire.

13. Capteur optoélectronique selon la revendication 12,
**caractérisé en ce que**
pour lesdites au moins deux évaluations, on choisit des durées de séquences d'étalement différentes pour le code de bruit pseudo aléatoire respectif, et/ou
pour chaque signal lumineux émis par l'émetteur de lumière (12) il est prévu du côté réception un seuil de détection défini, et/ou la longueur de la succession du code de bruit pseudo aléatoire est choisie en fonction du nombre de signaux lumineux émis activés en même temps sans se chevaucher.

14. Capteur optoélectronique selon la revendication 12 ou 13,
**caractérisé en ce que** le code de bruit pseudo aléatoire est subdivisé en au moins deux séquences d'étalement dans le but de réaliser un système combiné avec multiplexage temporel et multiplexage de code.

**Fig. 1**

EP 2 015 110 B1

**Fig. 2**

26      22      28

**Fig. 3**

26      22      28

EP 2 015 110 B1

# Fig. 4

H

26

1/T

f

H

40

1/T$_c$

f

H

28

1/T + 1/T$_c$

f

## Fig. 5

Daten 12A

22

Orthogonales Spreizsignal

14

Summe aller übertragener Signale

16

Daten 12A

12B

22

32

12N

22

12A zugeordneter Pseudozufalls-rauschcode

EP 2 015 110 B1

# Fig. 6

## a)

LICHTSENDER-CODES

| | | | | | | |
|---|---|---|---|---|---|---|
| 12A | 1 | -1 | -1 | 1 | -1 | 1 |
| 12B | 1 | 1 | -1 | -1 | 1 | 1 |
| 12C | 1 | 1 | -1 | 1 | 1 | 1 |

## b)

AUSSTRAHLUNG VON12A

| | | | | | | | |
|---|---|---|---|---|---|---|---|
| SENDEN (DATENBIT=1) | 1 | -1 | -1 | 1 | -1 | 1 | |
| EMPFÄNGER-CODEWORT | 1 | -1 | -1 | 1 | -1 | 1 | |
| MULTIPLIKATION | 1 | 1 | 1 | 1 | 1 | 1 | 6 |

| | | | | | | | |
|---|---|---|---|---|---|---|---|
| SENDEN (DATENBIT=0) | -1 | 1 | 1 | -1 | 1 | -1 | |
| EMPFÄNGER-CODEWORT | 1 | -1 | -1 | 1 | -1 | 1 | |
| MULTIPLIKATION | -1 | -1 | -1 | -1 | -1 | -1 | -6 |

## c)

SENDUNG VON 12B, EMPFÄNGER VERSUCHT, DIE SENDUNG VON 12A WIEDERZUGEWINNEN

| | | | | | | | |
|---|---|---|---|---|---|---|---|
| SENDEN (DATENBIT=1) | 1 | 1 | -1 | -1 | 1 | 1 | |
| EMPFÄNGER-CODEWORT | 1 | -1 | -1 | 1 | -1 | 1 | |
| MULTIPLIKATION | 1 | -1 | 1 | -1 | -1 | 1 | 0 |

## d)

SENDUNG VON 12C, EMPFÄNGER VERSUCHT, DIE SENDUNG VON 12A WIEDERZUGEWINNEN

| | | | | | | | |
|---|---|---|---|---|---|---|---|
| SENDEN (DATENBIT=1) | 1 | 1 | -1 | 1 | 1 | -1 | |
| EMPFÄNGER-CODEWORT | 1 | -1 | -1 | 1 | -1 | 1 | |
| MULTIPLIKATION | 1 | -1 | 1 | 1 | -1 | -1 | 0 |

## e)

SENDUNG VON 12B UND 12C, EMPFÄNGER VERSUCHT, DIE SENDUNG VON 12B WIEDERZUGEWINNEN

| | | | | | | | |
|---|---|---|---|---|---|---|---|
| 12B (DATENBIT=1) | 1 | 1 | -1 | -1 | 1 | 1 | |
| 12C (DATENBIT=1) | 1 | 1 | -1 | 1 | 1 | -1 | |
| KOMBINIERTES SIGNAL | 2 | 2 | -2 | 0 | 2 | 0 | |
| EMPFÄNGER-CODEWORT | 1 | 1 | -1 | -1 | 1 | 1 | |
| | 2 | 2 | 2 | 0 | 2 | 0 | 8 |

EP 2 015 110 B1

# Fig. 7

EP 2 015 110 B1

Korrelationsspektrum

$\Delta t_s = \Delta Pos. * K_p + Sum(\Delta Pos) * K$

Start Daten-folge

Zeitversetzung

# Fig. 8

Korrelationsspektrum

$\Delta t_S = \Delta Pos. * K$

Start
Datenfolge

Zeitversetzung

Entscheidung
ROT/GRÜN

EP 2 015 110 B1

# Fig. 9

Bezugs-Pseudozufallsrauschcode

Eingangssignal

$\times 10^8$     Korrelationsspektrum

# Fig. 10

Bezugs-Pseudozufallsrauschcode

Eingangssignal

$\times 10^8$     Korrelationsspektrum

# Fig. 11

Bezugs-Pseudozufallsrauschcode

Eingangssignal

x 10⁷ Korrelationsspektrum

# Fig. 12

Bezugs-Pseudozufallsrauschcode

Eingangssignal

x 10⁷ Korrelationsspektrum

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4035710 A1

- DE 19926214 A1